# NEUE EUROPÄISCHE PATENTSCHRIFT

(11) **EP 0 298 905 B2**
(45) Veröffentlichungstag und Bekanntmachung des Hinweises auf die Entscheidung über den Einspruch: **31.01.1996**
(45) Hinweis auf die Patenterteilung: 16.10.1991
(21) Anmeldenummer: 88730146.3
(22) Anmeldetag: 01.07.1988
(51) Int. Cl.: B60C 27/20

(54) **Gleitschutzvorrichtung für Fahrzeugräder**
Antiskid device for vehicle wheels
Dispositif antidérapant pour roues de véhicules

(30) Priorität: 08.07.1987 DE 3722900
(43) Veröffentlichungstag der Anmeldung: 11.01.1989
(73) Patentinhaber: RUD-Kettenfabrik Rieger & Dietz GmbH u. Co., D-73406 Aalen (DE)
(72) Erfinder: Zeiser, Peter, Dipl-Ing., D-7080 Aalen-Wasseralfingen (DE); Kaiser, Helmut, Dipl.-Ing.(FH), D-7080 Aalen-Hofherrnweiler (DE); Rieger, Hansjörg Werner, Dr.-Ing., D-7080 Aalen (DE)
(74) Vertreter: Böning, Manfred, Dr.-Ing.

(56) Entgegenhaltungen:
- AT-B- 348 885
- DE-A- 2 710 323
- DE-A- 2 747 025
- DE-A- 2 810 406
- DE-A- 2 846 907
- FR-A- 1 415 962
- US-A- 3 500 887

## Beschreibung

Die Erfindung betrifft eine Gleitschutzvorrichtung für Fahrzeugräder mit in Radumfangsrichtung betrachtet paarweise neben- und im Abstand voneinander angeordneten Kettenstrangabschnitten und mit diesen verbundenen, über den Radumfang verteilten Bauteilen, die jeweils mehrere Gleitschutzelemente bildende stollenförmige Vorsprünge aus einem biegsamen Gummi oder Kunststoff aufweisen und mit über die Vorsprünge vorstehenden Spikes bestückt sind.

Bei einer aus der DE-A-2747025 bekannten Vorrichtung der vorstehenden Art sind mit den Bauteilen Kettenstrangabschnitte verbunden, die von jeweils einem Bauteil zu Seitenketten oder ähnlichen Halterungen führen. Bei dieser Vorrichtung fehlen wie bei einer aus der AT-B-360844 bekannten Konstruktion in Radumfangsrichtung auf der Reifenlauffläche verlaufende, die Zwischenräume zwischen den Bauteilen überbrückende Kettenstrangabschnitte, und es bleiben folglich sowohl hinsichtlich der Seitenführung als auch des Fahrkomforts Wünsche offen.

Einen verbesserten Fahrkomfort bietet eine ebenfalls bekannte in der DE-A-2910084 offenbarte Gleitschutzvorrichtung mit Bauteilen aus biegsamem Material, bei der auf Kettenstrangabschnitte im Bereich der Lauffläche des Reifens verzichtet wird und bei der die Bauteile unmittelbar über zentrale, elastische Zugorgane miteinander verbunden sind. Der Verzicht auf Kettenstrangabschnitte im Laufnetzbereich beeinträchtigt auch hier die Gleitschutzwirkung, insbesondere die Seitenführungseigenschaften der Vorrichtung, wobei zusätzlich eine Schmälerung ihrer Gelenkigkeit in Kauf genommen werden muß. Die zur Erhöhung ihrer Griffigkeit mit Spikes ausgestatteten Gleitschutzelemente dieser Gleitschutzvorrichtung sind im übrigen asymmetrisch, d.h. so angeordnet, daß bei scharfen Bremsungen das Lenkverhalten des Fahrzeuges ungünstig beeinflußt wird.

Eine Gleitschutzvorrichtung mit im wesentlichen symmetrischer Verteilung von Gleitschutzelementen und Spikes zeigt die AT-B-348885. Diese Gleitschutzvorrichtung besteht aus einen Fahrzeugreifen bügelartig umgreifenden Bauteilen, welche wie die Querkettenstränge einer Leiterkette durch Seitenketten oder ähnliche Halterungen gehalten werden. Die leitersprossenartige Anordnung der Bauteile dieser Gleitschutzvorrichtung läßt allerdings sowohl hinsichtlich der Seitenführung als auch des Fahrkomforts ebenfalls Wünsche offen.

Eine Gleitschutzvorrichtung mit über den Reifenumfang verteilten, stollenförmige Vorsprünge aufweisenden Bauteilen, welche durch parallel zueinander vertaufende Kettenstränge miteinander verbunden sind, ist aus der DE-A-32 39 099 bekannt. Bei dieser Gleitschutzvorrichtung müssen die Bauteile allerdings aus Stahl bestehen, da ein Teil ihrer Vorsprünge außerhalb des Laufnetzbereiches des Fahrzeugrades angeordnet ist und bei Ausbildung der Bauteile aus biegsamem Material zur Radachse hin ausweichen und folglich wirkungslos werden würde. Da die Bauteile im übrigen mit hoch aufragenden Querstegen ausgestattet sind, eignet sich diese Gleitschutzvonrichtung allenfalls für den Einsatz auf langsam fahrenden Fahrzeugen im weichen Gelände. Entsprechendes gilt für eine aus der FR-A-854645 bekannte, ähnlich aufgebaute Gleitschutzvorrichtung, deren mit Gleitschutzelemente bildenden Vorsprüngen versehene Bauteile aus Platten mit senkrecht zur Plattenebene angeordneten Quer- und Längsstegen bestehen.

Bekannt ist schließlich aus der DE-A-2846909 eine Reifenkette, bei der aus Gummi oder Kunststoff bestehende Tragelemente durch ein in sich geschlossenes Kettennetz gehalten werden. Die Tragelemente übernehmen in diesem Fall keine Gleitschutzaufgabe, sondern dienen lediglich dazu, die Aufstandsfläche eines Fahrzeugrades zu erhöhen.

Der Erfindung liegt die Aufgabe zugrunde, eine insbesondere für den Einsatz auf Personenkraftwagen geeignete Gleitschutzvorrichtung zu schaffen, die sowohl auf vereisten als auch auf verschneiten Straßen gute Gleitschutzeigenschaffen bietet und sich durch große Laufruhe auszeichnet. Diese Aufgabe wird erfindungsgemäß dadurch gelöst, daß mindestens ein Teil der Vorsprünge in Radumfangsrichtung betrachtet annähernd fluchtend zu den im montierten Zustand im Bereich der Lauffläche des Fahrzeugrades zu liegen kommenden, die aufeinanderfolgenden Bauteile miteinanderverbindenden Kettenstrangabschnitten angeordnet ist, daß die äußere Breite der Glieder der Kedenstrangabschnitte zumindest annähernd gleich der Höhe der Bauteile im Bereich ihrer Vorsprünge ist und daß die Vorsprünge bei montierter Gleitschutzvorrichtung der Fahrbahn zugewandte Flächenabschnitte aufweisen, deren Abstand von der Lauffläche des Fahrzeugrades im wesentlichen gleich dem Abstand der der Fahrbahn zugewandten Scheitellinien der Längsschenkel von Vertikalgliedern der Kettenstrangabschnitte von der Lauffläche ist.

Bei der erfindungsgemäßen Gleitschutzvorrichtung wirken die Kettenstrangabschnitte und die in Radumfangsrichtung im wesentlichen fluchtend mit ihnen angeordneten Gleitschutzelemente einem Ausbrechen eines mit der erfindungsgemäßen Gleitschutzvorrichtung ausgerüsteten Fahrzeuges entgegen. Durch den Wechsel von Kettenstrangabschnitten und aus Gummi oder Kunststoff bestehenden Bauteilen mit Gleitschutzelementen ist nicht nur ein gutes Anpassungsvermögen der Gleitschutzvorrichtung an das Fahrzeugrad gewährleistet, sondern wird auch das Zusammenlegen und Aufbewahren der Gleitschutzvorrichtung erleichtert. Die Ausstattung der Gleitschutzelemente tragenden Bauteile mit Spikes verbessert die Gleitschutzeigenschaffen auf vereister Fahrbahn erheblich. Da die äußere Breite der Kettenglieder und die Höhe der nicht-metallischen Gleitschutzelemente gleich groß sind, erzielt man einen ruhigen Lauf. Auftrockener Fahrbahn wird die Laufruhe dadurch gefördert, daß die zwischen den Kettenstrangabschnitten angeordneten Bauteile aus Gummi oder Kunststoff geräuschdämpfend wirken. Sie verbessern darüber hinaus die Haftreibungsbedingungen zwischen Rad und trockener Fahrbahn, während die Spikes sowohl die Bauteile als auch die Kettenstrangabschnitte vor unerwünscht hohem Verschleiß schützen.

Weitere Einzelheiten und Merkmale der erfindungsgemäßen Gleitschutzvorrichtung ergeben sich aus den Unteransprüchen und der nachfolgenden Beschreibung bevorzugter, in der beigefügten Zeichnung dargestellter Ausführungsbeispiel. Es zeigen :
- Fig. 1: die perspektivische Ansicht einer auf ein Fahrzeugrad aufgezogenen Gleitschutzvorrichtung,
- Fig. 2: in vergrößertem Maßstab eine Teildraufsicht auf die Gleitschutzvorrichtung gemäß Fig. 1,
- Fig. 3: einen Schnitt längs der Linie III-III in Fig. 2,
- Fig. 4: eine Ansicht in Richtung der Pfeile IV-IV in Fig. 2,
- Fig. 5: eine der Fig. 2 entsprechende Draufsicht auf ein Bauteil, welches eine gliedweise Verkürzung von Kettenstrangabschnitten zuläßt,
- Fig. 6: einen Schnitt längs der Linie VI-VI in Fig. 5,
- Fig. 7: einen Schnitt längs der Linie VII-VII in Fig. 5,
- Fig. 8: einen der Fig. 7 entsprechenden Schnitt durch ein modifiziertes Ausführungsbeispiel,
- Fig. 9: die Draufsicht auf ein Bauteil einer Gleitschutzvorrichtung mit durchgehenden Kettensträngen und
- Fig. 10: einen Teilschnitt längs der Linie X-X in Fig. 9.

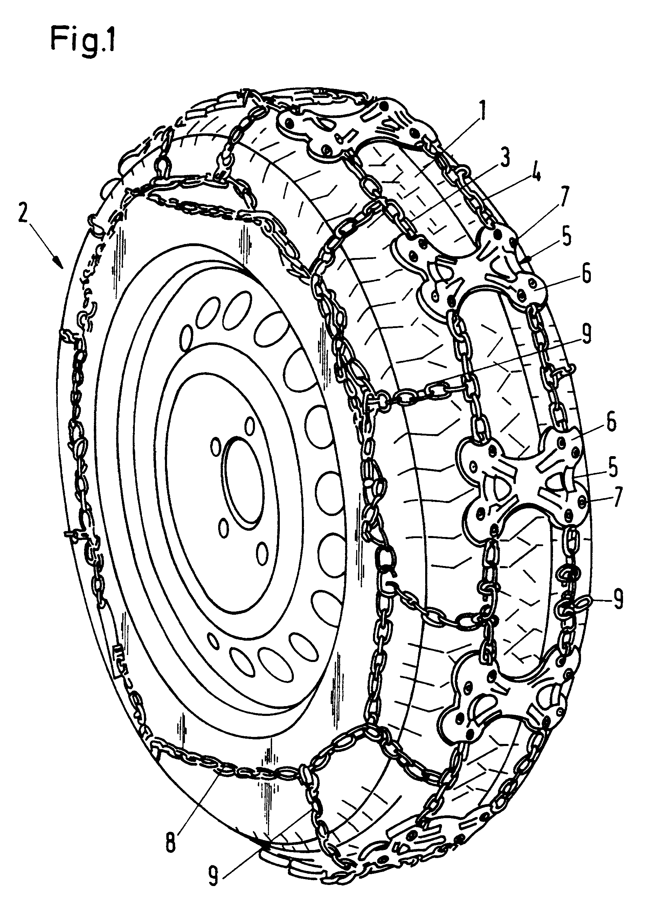

In Fig. 1 ist 1 die Lauffläche eines Fahrzeugrades 2, auf das eine Gleitzchutzvorrichtung aufgezogen ist. Die Gleitschutzvonrichtung besteht aus paarweise nebeneinander angeordneten Kettenstrangabschnitten 3 und 4, welche zur Erzielung guter Spurführungseigenschaften im Bereich der Schultern des auf das Fahrzeugrad 2 aufgezogenen Reifens parallel zueinander verlaufen. Zwischen den Kettenstrangabschnitten 3 bzw. 4 sind Bauteile 5 aus Gummi oder Kunststoff angeordnet, die von hochreliefartigen Vorsprüngen 6 gebildete Gleitschutzelemente aufweisen und im Bereich ihrer Vorsprünge 6 mit Spikes 7 bestückt sind. Die in die Bauteile 5 eingebetteten Spikes 7 mindern nicht nur die Verschleißbelastung der Bauteile 5 und der Kettenstrangabschnitte 3 und 4, sondern sie verbessern außerdem deutlich die Gleitschutzeigenschaffen der Vorrichtung auf vereister Fahrbahn. Zur Halterung des aus den Bauteilen 5 und den Kettenstrangabschnitten 3 und 4 bestehenden Laufnetzes dienen Seitenketten 8, mit denen die Kettenstrangabschnitte 3 und 4 über kurze Kettenstrangstücke 9 verbunden sind. Dadurch, daß die Bauteile 5 Abstandshalter bilden, welche die parallelen Kettenstrangabschnitte 3,4 im Bereich der Schultern des auf das Fahrzeugrad 2 aufgezogenen Reifens halten, d.h. in der Zone der größten Druckbeanspruchung, kann auf Querkettenstränge verzichtet werden. Dies wirkt sich insofern positiv aus, als erfahrungsgemäß der Verschleiß von Laufnetzen üblicher Gleitschutzketten in der Laufnetzmitte am größten ist.

Einzelheiten des Aufbaus der Bauteile 5 ergeben sich aus den nachfolgenden Figuren.

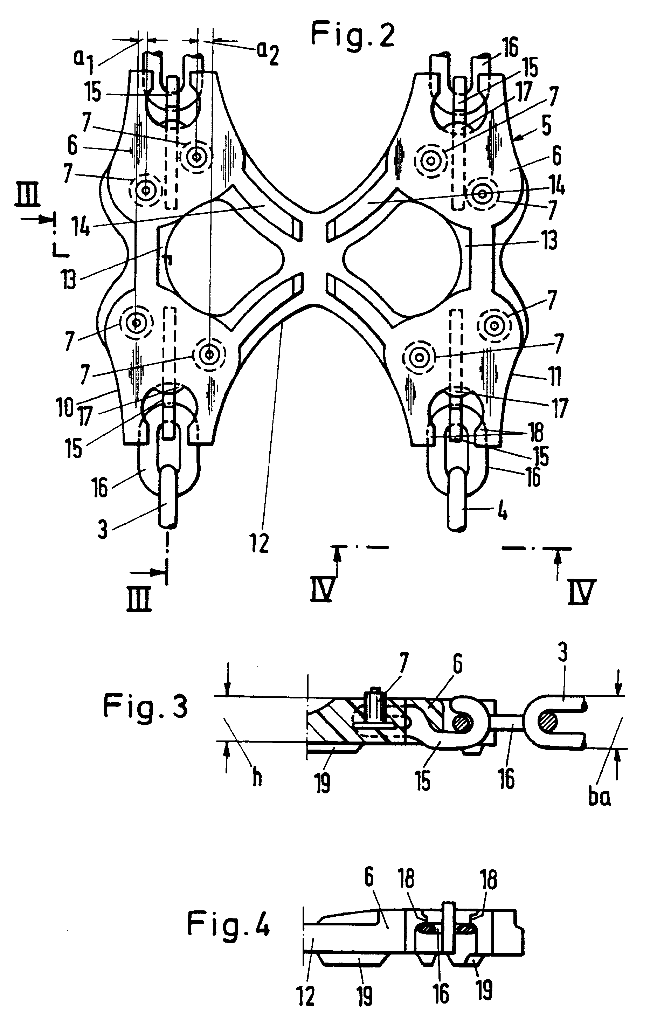

Aus Fig. 2 ist erkennbar, daß das Bauteil 5 aus zwei Längsstücken 10 und 11 besteht, die durch einen X-förmigen Abstandschalter 12 miteinanderverbunden sind und in ihrem mittleren Bereich Einschnürungen 13 aufweisen. Die Vorsprünge 6 erst:recken sich über die gesamten Längsstücke 10, 11 und mit Auslegern 14 in den Bereich der Abstandshalter 12. Durch die X-förmige Ausbildung derin ihrer Mitte vorsprungfreien Abstandshalter 12 und durch die Einschnürungen 13 wird ein hohes Maß an Flexibilität der Bauteile 5 erreicht und so die Voraussetzung dafür geschaffen, daß die Bauteile über ihren ganzen Bereich eng am Reifen anlegen. Dieses enge Anliegen kommt nicht nur der Standzeit der Bauteile 5 zugute, sondern es fördert auch die Laufruhe eines mit der Gleitschutzvorrichtung bestückten Fahrzeuges. An den Enden der Längsstücke 10 und 11 sind formschlüssig in die Vorsprünge 6 Haken 15 für jeweils ein parallel zur Lauffläche orientiertes Glied 16 der Kettenstrangabschnitte 3 bzw. 4 eingebettet. Elastische Verriegelungsnasen 17 verhindern ein Aushaken der Glieder 16 aus den Haken 15, während Sperrnasen 18 ein Hoch- und Querschwenken der Glieder 16 unterbinden.

Wie man aus Fig. 2 erkennen kann, sind die Längsstücke 10 und 11 im wesentlichen fluchtend zu den parallelen Kettenstrangabschnitten 3 und 4 angeordnet. Sie bilden mit diesen im Schulterbereich des auf das jeweilige Fahrzeugrad aufgezogenen Reifens, d.h. im Bereich des größten Bodendruckes angeordnete Spurringe, die einem seitlichen Ausweichen des Fahrzeuges entgegenwirken. Um die Spurhaltung auf dem gesamten Umfang des Fahrzeugrades 2 sicherzustellen und eine hohe Laufruhe zu verwirklichen, ist die Höhe h der Bauteile 5 im Bereich ihrer Vorsprünge 6 im wesentlichen gleich der äußeren Breite bₐ der Glieder der Kettenstrangabschnitte 3 bzw. 4, wobei an der Unterseite der Bauteile 5 angeordnete Mitnehmer 19, die einem unerwünschten Durchrutschen des Laufnetzes gegenüber der Lauffläche entgegenwirken, ein leichtes Wandern der Gleitschutzvorrichtung jedoch nicht ausschließen, außer Betracht bleiben.

Durch die Formgebung der Vorsprünge 6 und insbesondere durch die Ausleger 14 wird beim Einsatz der Gleitschutzvorrichtung im Schnee ein ausreichender Vortrieb gewährleistet. Auf vereister Fahrbahn dagegen kommt den Spikes 7 die dominierende Bedeutung bezüglich der zu erzielenden Gleitschutzwirkung zu. Um einen optimalen Gleitschutzeffekt zu erzielen, sind an den Ecken der Bauteile 5 jeweils zwei Spikes 7 angeordnet, wobei der Abstand jeweils zweier in Laufrichtung aufeinanderfolgender Spikes 7 eines Bauteils an der Bauteilaußenseite kleiner ist als an der Bauteilinnenseite. Als günstig erweist es sich darüber hinaus, daß die Spikes eines Bauteiles 5 in Radumfangsrichtung betrachtet um Beträge a₁ bzw. a₂ quer zueinander versetzt sind.

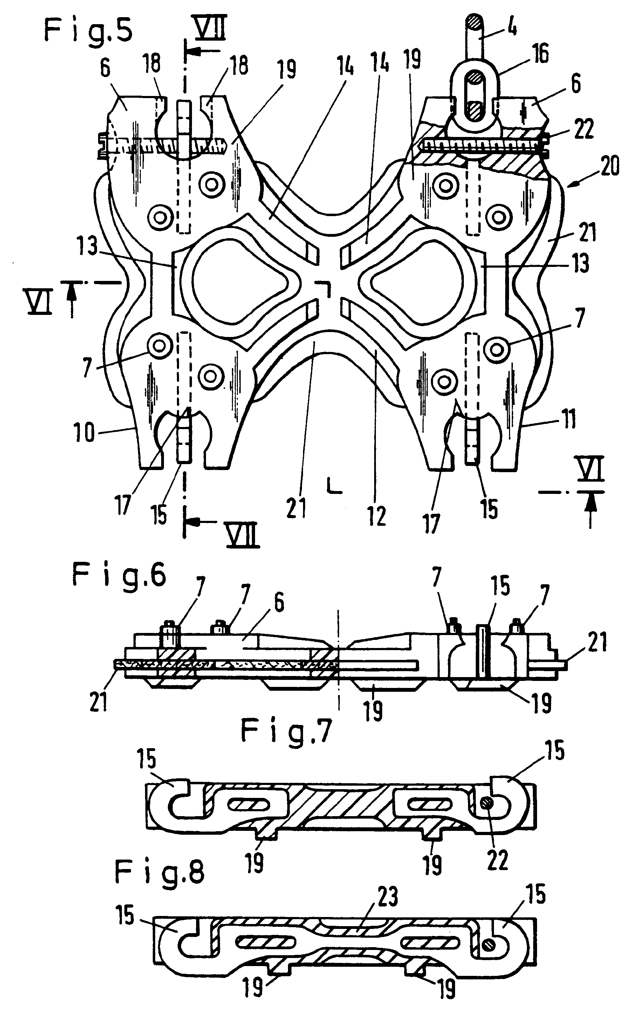

Ein modifiziertes Bauteil 20 ist in den Fig. 5 bis 7 dargestellt. Teile, die Teilen des Bauteiles 5 gemäß Fig. 2 bis 4 entsprechen, sind durch die gleichen Bezugszeichen gekennzeichnet, so daß es genügt, wenn hier nur die Unterschiede zwischen den beiden Konstruktionen beschrieben werden. Anders als das Bauteil 5 ist das Bauteil 20 mit einer zur Erhöhung seiner Festigkeit dienenden Gewebeeinlage 21 versehen. Außerdem sind am einen Ende der Längsstücke 10 und 11 an die Stelle von Verriegelungsnasen 17 Schrauben 22 getreten, die zur Sicherung des jeweils in ein Bauteil 20 eingehängten Gliedes 16 dienen. Die Schrauben 22 sind mehrgängig ausgebildet und mit einem Steilgewinde ausgestattet, das ein schnelles und bequemes Befestigen und Lösen von Gliedern 16 ermöglicht, falls man die Länge des Laufnetzes verkürzen möchte, um sie an den Umfang des Fahrzeugrades 2 anzupassen. Die Anpassung der Gleitschutzvorrichtung an den Radumfang ist für die Erzielung einer optimalen Gleitschutzwirkung von erheblicher Bedeutung.

Sowohl bei dem Bauteil 5 als auch beim Bauteil 20 erfolgt die Verbindung zweier Haken 15 eines Längsstückes 10 bzw. 11 durch das Grundmaterial der Bauteile und/oder durch die Gewebeeinlage 21. Stattdessen ist es auch möglich, die Haken 15, wie dies in Fig. 8 angedeutet ist, durch ein Kupplungselement 23, welches einstückig mit den Haken oder losbar oder unlösbar mit diesen verbunden sein kann, miteinander zu koppeln. Das Kupplungselement bildet in jedem Fall eine die Zugkräfte übenragende Brücke zwischen den jeweils fluchtend zueinander angeordneten Haken 15.

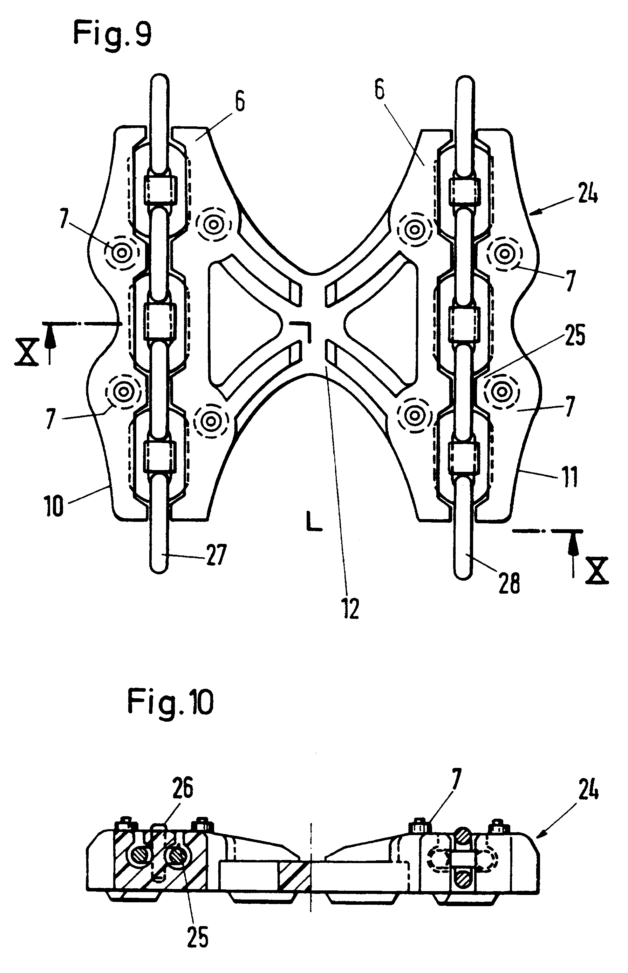

Ein weiteres modifiziertes Bauteil 24 ist in den Fig. 9 und 10 dargestellt. Es ist im Bereich seiner Längsstücke 10 und 11 mit Aufnahmen 25 und Verankerungsorganen 26 für einhängbare Glieder durchgehender Kettenstränge 27, 28 ausgestattet.

Bei allen beschriebenen Konstruktionen sollte die Zahl der zwischen aufeinanderfolgenden Bauteilen 5, 20, 24 angeordneten Glieder der parallelen Kettenstrangabschnitte 3, 4 bzw. 27, 28 nicht weniger als drei und nicht mehr als sieben betragen.

## Patentansprüche

1. Gleitschutzvorrichtung für Fahrzeugräder mit in Radumfangsrichtung betrachtet paarweise neben- und im Abstand voneinander angeordneten Kettenstrangabschnitten (3, 4) und mit diesen verbundenen über den Radumfang verteilten Bauteilen (5), die jeweils mehrere Gleitschutzelemente bildende stollenförmige Vorsprünge (6) aus einem biegsamen Gummi oder Kunststoff, aufweisen und mit über die Vorsprünge (6) vorstehenden Spikes (7) bestückt sind, dadurch **gekennzeichnet**, daß mindestens ein Teil der Vorsprünge (6) in Radumfangsrichtung betrachtet annähernd fluchtend zu den im montierten Zustand im Bereich der Lauffläche des Fahrzeugrades zu liegen kommenden, die aufeinanderfolgenden Bauteile (5, 20, 24) miteinander verbindenden Kettenstrangabschnitten (3, 4) angeordnet ist, daß die äußere Breite (bₐ) der Glieder der Kettenstrangabschnitte (3, 4) zumindest annähernd gleich der Höhe (h) der Bauteile (5, 20, 24) im Bereich ihrer Vorsprünge (6) ist und daß die Vorsprünge (6) bei montierter Gleitschutzvorrichtung der Fahrbahn zugewandte Flächenabschnitte aufweisen, deren Abstand von der Lauffläche des Fahrzeugrades im wesentlichen gleich dem Abstand der der Fahrbahn zugewandten Scheitellinien der Längsschenkel von Vertikalgliedern der Kettenstrangabschnitte (3, 4) von der Lauffläche ist.

2. Gleitschutzvorrichtung nach Anspruch 1, dadurch gekennzeichnet, daß die Bauteile (5, 20, 24) zwei in Radumfangsrichtung angeordnete Längsstücke (10, 11) und einen Abstandshalter (12) aufweisen.

3. Gleitschutzvorrichtung nach Anspruch 2, dadurch gekennzeichnet, daß die Längsstücke (10, 11) und der Abstandshalter (12) einstückig ausgebildet sind.

4. Gleitschutzvorrichtung nach Anspruch 2 oder 3, dadurch gekennzeichnet, daß die Abstandshalter (12) X-förmig ausgebildet sind.

5. Gleitschutzvorrichtung nach einem der Ansprüche 2 bis 4, dadurch gekennzeichnet, daß die Längsstücke (10, 11) Einschnürungen (13) aufweisen.

6. Gleitschutzvorrichtung nach einem der Ansprüche 2 bis 5, dadurch gekennzeichnet, daß die Vorsprünge (6) im Bereich der Längsstücke (10, 11) der Bauteile (5, 20, 24) angeordnet sind.

7. Gleitschutzvorrichtung nach einem der Ansprüche 1 bis 6, dadurch gekennzeichnet, daß die Bauteile (5, 20, 24) und die Vorsprünge (6) einstückig ausgebildet sind.

8. Gleitschutzvorrichtung nach einem der Ansprüche 1 bis 7, dadurch gekennzeichnet, daß die Kettenstrangabschnitte (3, 4) und die Vorsprünge (6) der durch sie miteinander verbundenen Bauteile (5) im Bereich der schultern der Reifen des Fahrzeugrades (2) angeordnet sind.

9. Gleitschutzvorrichtung nach einem der Ansprüche 1 bis 8, dadurch gekennzeichnet, daß die Kettenstrangabschnitte (3, 4) und die Bauteile (5, 20, 24) einen geschlossenen, eng am Radumfang anliegenden Ring bilden.

10. Gleitschnutzvorrichtung nach Anspruch 9, dadurch gekennzeichnet, daß der Ringumfang veränderbar ist.

11. Gleitschutzvorrichtung nach einem der Ansprüche 1 bis 10, dadurch gekennzeichnet, daß mindestens ein Teil der Bauteile (5, 20, 24) mit formschlüssig im Bauteil und in dessen Vorsprüngen (6) verankerten Anschlußorganen für Glieder (16) der Kettenstrangabschnitte (3, 4) versehen ist.

12. Gleitschutzvorrichtung nach Anspruch 11, dadurch gekennzeichnet, daß die Anschlußorgange von Haken (15) zum Einhängen von Gliedern (16) der Kettenstrangabschnitte (3, 4) gebildet werden.

13. Gleitschutzvorrichtung nach Anspruch 11 oder 12, dadurch gekennzeichnet, daß die Anschlußorgane eines Bauteiles (5, 20, 24) für jeweils zwei aufeinanderfolgende Kettenstrangabschnitte (3, 4) über Kupplungselemente (23) miteinander verbunden sind.

14. Gleitschutzvorrichtung nach Anspruch 11 oder 12, dadurch gekennzeichnet, daß zwei aufeinanderfolgende Kettenstrangabschnitte (3, 4) durch jeweils ein an seinen beiden Enden Haken (15) aufweisendes Anschlußorgan miteinander verbunden sind.

15. Gleitschutzvorrichtung nach einem der Ansprüche 12 bis 14, dadurch gekennzeichnet, daß mindestens ein Teil der Vorsprünge (6) elastische Verriegelungsnasen (17) für in die Haken (15) eingehängte Glieder (16) der Kettenstrangabschnitte (3, 4) bildet.

16. Gleitschutzvorrichtung nach einem der Ansprüche 12 bis 15, dadurch gekennzeichnet, daß die in die Haken (15) eingehängten Glieder (16) der Kettenstrangabschnitte (3, 4) Honzontalglieder bilden, deren Längsschenkel durch Sperrnasen (18) gegen Hoch- und Querschwenken gesichert sind.

17. Gleitschutzvorrichtung nach einem der Ansprüche 1 bis 11, dadurch gekennzeichnet, daß mindestens einige Kettenstrangabschnitte (3, 4) von Abschnitten durchgehender Kettenstränge (27, 28) gebildet werden, deren im Bereich der Bauteile (24) gelegene Glieder in Aufnahmen (25) der Bauteile (24) bzw. durch Vorsprünge (6) gehalten werden.

18. Gleitschutzvorrichtung nach einem der Ansprüche 11 bis 17, dadurch gekennzeichnet, daß mindestens einige der mit den anschlußorganen verbundenen Glieder (16) der Kettenstrangabschnitte (3, 4) durch jeweils eine Schraube (22) in der eingehängten Position gesichert sind.

19. Gleitschutzvorrichtung nach Anspruch 18, dadurch gekennzeichnet, daß die Schraube (22) mehrgängig ist.

20. Gleitschutzvorrichtung nach Anspruch 18 oder 19, dadurch gekennzeichnet, daß die Schraube (22) ein Steilgewinde hat.

21. Gleitschutzvorrichtung nach einem der Ansprüche 1 bis 20, dadurch gekennzeichnet, daß im Bereich der Ecken der Bauteile (5, 20, 24) jeweils zwei Spikes (7) angeordnet sind.

22. Gleitschutzvorrichtung nach Anspruch 21, dadurch gekennzeichnet, daß der Abstand in Laufrichtung aufeinanderfolgender Spikes (7) eines Bauteiles (5, 20, 24) jeweils unterschiedlich groß ist.

23. Gleitschutzvorrichtung nach Anspruch 21 oder 22, dadurch gekennzeichnet, daß der Abstand jeweils zweier in Laufrichtung aufeinanderfolgender Spikes (7) eines Bauteiles (5, 20, 24) an der Bauteilaußenseite kleiner als an der Bauteilinnenseite ist.

24. Gleitschutzvorrichtung nach einem der Ansprüche 21 bis 23, dadurch gekennzeichnet, daß die Spikes (7) eines Bauteiles (5, 20, 24) in Radumfangsrichtung betrachtet quer zueinander versetzt sind.

25. Gleitschutzvorrichtung nach einem der Ansprüche 1 bis 24, dadurch gekennzeichnet, daß die Bauteile (5, 20, 24) und die Vorsprünge (6) aus Polyurethan bestehen.

26. Gleitschutzvorrichtung nach Anspruch 25, dadurch gekennzeichnet, daß die Bauteile (5, 20, 24) durch Gewebeeinlagen (21) verstärkt sind.

27. Gleitschutzvorrichtung nach einem der Ansprüche 1 bis 26, dadurch gekennzeichnet, daß die Bauteile (5, 20, 24) an ihrer Rückseite mit Mitnehmern (19) versehen sind.

28. Gleitschutzvonrichtung nach einem der Ansprüche 1 bis 27, dadurch gekennzeichnet, daß die Kettenstrangabschnitte (3, 4) aus mindestens drei und höchstens sieben Kettengliedern bestehen.

## Claims

1. An antiskid device for vehicle wheels with chain lengths (3, 4) arranged in pairs side by side and with spacing from one another considered in the wheel circumferential direction, and components (5) connected with these lengths and distributed over the wheel circumference, which components comprise projections (6) of stud form of a flexible rubber or synthetic plastics material, which projections each form several antiskid elements, the components (5) being equipped with spikes (7) protruding beyond the projections (6), characterised in that at least some of the projections (6), considered in the circumferential direction of the wheel, are arranged approximately in alignment with the chain lengths (3, 4) which come to lie in the assembled condition in the region of the tread surface of the vehicle wheel and connect the successive components (5, 20, 24) with one another, in that the external width (bₐ) of the links of the chain lengths (3, 4) is at least approximately equal to the height (h) of the components (5, 20, 24) in the region of their projections (6) and in that the projections (6), when the antiskid device is fitted, have surface sections facing the roadway, the distance of which from the tread surface of the vehicle wheel is substantially equal to the distance of the apex lines, facing the roadway, of the longitudinal bars of vertical links of the chain lengths (3, 4) from the tread surface.

2. An antiskid device according to Claim 1, characterised in that the components (5, 20, 24) comprise two longitudinal pieces (10, 11) arranged in the circumferential direction of the wheel and a distance member (12).

3. An antiskid device according to Claim 2, characterised in that the longitudinal pieces (10, 11) and the distance member (12) are made in one piece.

4. An antiskid device according to Claim 2 or 3, characterised in that the distance members (12) are made in X-form.

5. An antiskid device according to any one of Claims 2 to 4, characterised in that the longitudinal pieces (10, 11) have constrictions (13).

6. An antiskid device according to any one of Claims 2 to 5, characterised in that the projections (6) are arranged in the region of the longitudinal pieces (10, 11) of the components (5, 20, 24).

7. An antiskid device according to any one of Claims 1 to 6, characterised in that the components (5, 20, 24) and the projections (6) are made in one piece.

8. An antiskid device according to any one of Claims 1 to 7, characterised in that the chain lengths (3, 4) and the projections (6) of the components (5) connecting them with one another are arranged in the region of the shoulders of the tyres of the vehicle wheel (2).

9. An antiskid device according to any one of Claims 1 to 8, characterised in that the chain lengths (3, 4) and the components (5, 20, 24) form a closed ring resting closely on the wheel circumference.

10. An antiskid device according to Claim 9, characterised in that the ring circumference is variable.

11. An antiskid device according to any one of Claims 1 to 10, characterised in that at least a part of the components (5, 20, 24) is provided with attachment members for links (16) of the chain lengths (3, 4), which members are anchored in shape-engaging manner in the component and in its projections (6).

12. An antiskid device according to Claim 11, characterised in that the attachment elements are formed by hooks (15) for the hook attachment of links (16) of the chain lengths (3, 4).

13. An antiskid device according to Claim 11 or 12, characterised in that the attachment elements of one component (5, 20, 24) in each case for two successive chain lengths (3, 4) are connected with one another through coupling elements (23).

14. An antiskid device according to Claim 11 or 12, characterised in that two successive chain lengths (3, 4) are connected with one another by an attachment element comprising hooks (15) at both its ends.

15. An antiskid device according to any one of Claims 12 to 14, characterised in that at least one part of the projections (6) forms elastic locking noses (17) for links (16) of the chain lengths (3, 4) attached to the hooks (15).

16. An antiskid device according to any one of Claims 12 to 15, characterised in that the links (16) of the chain lengths (3, 4) attached to the hooks (15) form horizontal links of which the longitudinal bars are secured by blocking noses (18) against pivoting upwards and transversely.

17. An antiskid device according to any one of Claims 1 to 11, characterised in that at least some chain lengths (3, 4) are formed by sections of continuous chain strands (27, 28), of which the links placed in the region of the components (24) are held in sockets (25) of the components (24) or by projections (6).

18. An antiskid device according to any one of Claims 11 to 17, characterised in that at least some of the links (16) of the chain lengths (3, 4) connected with the attachment elements are secured in the hooked-in position each by a screw (22).

19. An antiskid device according to Claim 18, characterised in that the screw (22) is a multi-start screw.

20. An antiskid device according to Claim 18 or 19, characterised in that the screw (22) has a coarse thread.

21. An antiskid device according to any one of Claims 1 to 20, characterised in that two spikes (7) are arranged in the region of each of the corners of the components, (5, 20, 24).

22. An antiskid device according to Claim 21, characterised in that the spacing in the running direction of successive spikes (7) of a component (5,20, 24) is of different size in each case.

23. An antiskid device according to Claim 21 or 22, characterised in that the spacing of each two spikes (7) succeeding one another in the running direction of a component (5, 20, 24) is smaller on the outer side of the component than on the inner side of the component.

24. An antiskid device according to any one of Claims 21 to 23, characterised in that the spikes (7) of a component (5, 20, 24) considered in the circumferential direction of a wheel are staggered transversely of one another.

25. An antiskid device according to any one of Claims 1 to 24, characterised in that the components (5, 20, 24) and the projections (6) consist of polyurethane.

26. An antiskid device according to Claim 25, characterised in that the components (5, 20, 24) are reinforced by fabric inlays (21).

27. An antiskid device according to any one of Claims 1 to 26, characterised in that the components (5, 20, 24) are provided on their rears with engaging members (19).

28. An antiskid device according to any one of Claims 1 to 27, characterised in that the chain lengths (3, 4) consist of at least three and at most seven chain links.

## Revendications

1. Dispositif antidérapant pour des roues de véhicules, avec des tronçons de chaînes (3,4) qui, vus dans le sens circonférentiel de la roue, sont disposés par paires à distance et côte-à-côte, et avec des éléments constitutifs (5), reliés à ces tronçons de chaînes et répartis sur la circonférence de la roue, qui présentent chacun plusieurs saillies (6) en forme de côtes, constituant des éléments antidérapants et réalisées en caoutchouc ou matière plastique flexible , et qui sont équipés de crampons (7) dépassant des saillies (6), **caractérisé** en ce qu'au moins une partie des saillies (6), vues dans le sens circonférentiel de la roue, sont disposées approximativement en alignement avec les tronçons de chaînes (3,4) qui relient entre eux les éléments constitutifs successifs (5,20,24) et qui viennent s'appliquer, à l'état monté, dans la région de la bande de roulement de la roue de véhicule, en ce que la largeur extérieure (bₐ) des maillons des tronçons de chaînes (3,4) est au moins approximativement égale à la hauteur (h) des éléments constitutifs (5,20,24) dans la région de leurs saillies (6), et en ce que les saillies (6), lorsque le dispositif antidérapant est monté, présentent des parties de surface, tournées vers la chaussée, dont la distance de la bande de roulement de la roue de véhicule est sensiblement égale à la distance de la bande de roulement des lignes de sommets, tournées vers la chaussée, des branches longitudinales des maillons verticaux des tronçons de chaînes (3,4).

2. Dispositif antidérapant selon la revendication 1, caractérisé en ce que les éléments constitutifs (5,20,24) présentent deux parties longitudinales (10,11) disposées dans le sens circonférentiel de la roue, et un écarteur (12).

3. Dispositif antidérapant selon la revendication 2, caractérisé en ce que les parties longitudinales (10,11) et l'écarteur (12) sont réalisés en une pièce.

4. Dispositif antidérapant selon la revendication 2 ou 3, caractérisé en ce que les écarteurs (12) sont réalisés en forme de X.

5. Dispositif antidérapant selon l'une des revendications 2 à 4, caractérisé en ce que les parties longitudinales (10,11) présentent des rétrécissements (13).

6. Dispositif antidérapant selon l'une des revendications 2 à 5, caractérisé en ce que les saillies (6) sont disposées dans la région des parties longitudinales (10,11) des éléments constitutifs (5,20,24).

7. Dispositif antidérapant selon l'une des revendications 1 à 6, caractérisé en ce que les éléments constitutifs (5,20,24) et les saillies (6) sont réalisés en une pièce.

8. Dispositif antidérapant selon l'une des revendications 1 à 7, caractérisé en ce que les tronçons de chaînes (3,4), et les saillies (6) des éléments constitutifs (5) mutuellement reliés par ces tronçons de chaînes, sont disposés dans la région des épaulements du pneumatique de la roue de véhicule (2).

9. Dispositif antidérapant selon l'une des revendications 1 à 8, caractérisé en ce que les tronçons de chaînes (3,4) et les éléments constitutifs (5,20,24) constituent un anneau fermé s'appliquant étroitement contre la circonférence de la roue.

10. Dispositif antidérapant selon la revendication 9, caractérisé en ce que la circonférence de l'anneau est modifiable.

11. Dispositif antidérapant selon l'une des revendications 1 à 10, caractérisé en ce qu'au moins une partie des éléments constitutifs (5,20,24) sont munis d'organes de raccordement pour des maillons (16) des tronçons de chaînes (3,4), organes qui sont ancrés par épousement de formes dans l'élément et dans ses saillies (6).

12. Dispositif antidérapant selon la revendication 11, caractérisé en ce que les organes de raccordement sont constitués par des crochets (15) pour l'accrochage de maillons (16) des tronçons de chaînes (3,4).

13. Dispositif antidérapant selon la revendication 11 ou 12, caractérisé en ce que les organes de raccordement d'un élément constitutif (5,20,24) qui sont destinés à deux tronçons de chaînes successifs (3,4), sont mutuellement reliés par l'intermédiaire d'éléments d'accouplement (23).

14. Dispositif antidérapant selon la revendication 11 ou 12, caractérisé en ce que deux tronçons de chaînes successifs (3,4) sont mutuellement reliés par l'intermédiaire d'un organe de raccordement respectif présentant des crochets (15) à ses deux extrémités.

15. Dispositif antidérapant selon l'une des revendications 12 à 14, caractérisé en ce qu'au moins une partie des saillies (6) forment des ergots de blocage élastiques (17) pour les maillons (16) des tronçons de chaînes (3,4) qui sont accrochés dans les crochets (15).

16. Dispositif antidérapant selon l'une des revendications 12 à 15, caractérisé en ce que les maillons (16) des tronçons de chaînes (3,4) qui sont accrochés dans les crochets (15), constituent des maillons horizontaux dont les branches longitudinales sont empêchées de pivoter vers le haut et transversalement par des ergots d'arrêt (18).

17. Dispositif antidérapant selon l'une des revendications 1 à 11, caractérisé en ce qu'au moins certains des tronçons de chaînes (3,4) sont constitués par des tronçons de chaînes continues (27,28), dont les maillons situés dans la région des éléments constitutifs (24) sont maintenus dans des logements (25) des éléments constitutifs (24), ou par des saillies (6).

18. Dispositif antidérapant selon l'une des revendications 11 à 17, caractérisé en ce qu'au moins certains des maillons (16) des tronçons de chaînes (3,4) qui sont reliés aux organes de raccordement, sont assujettis en position accrochée par des vis respectives (22).

19. Dispositif antidérapant selon la revendication 18, caractérisé en ce que la vis (22) est à plusieurs filets.

20. Dispositif antidérapant selon la revendications 18 ou 19, caractérisé en ce que la vis (22) possède un pas rapide.

21. Dispositif antidérapant selon l'une des revendications 1 à 20, caractérisé en ce que deux crampons respectifs (7) sont disposés dans chaque coin des éléments constitutifs (5,20,24).

22. Dispositif antidérapant selon la revendication 21, caractérisé en ce que la distance entre des crampons (7) d'un élément constitutif (5,20,24) qui se succèdent dans le sens de roulement est chaque fois différente.

23. Dispositif antidérapant selon la revendication 21 ou 22, caractérisé en ce que la distance entre deux crampons (7) d'un élément constitutif (5,20,24) qui se succèdent dans le sens de roulement est chaque fois plus petite sur le côté extérieur de l'élément que sur le côté intérieur.

24. Dispositif antidérapant selon l'une des revendications 21 à 23, caractérisé en ce que les crampons (7) d'un élément constitutif (5,20,24) sont, vus dans le sens circonférentiel de la roue, transversalement décalés les uns par rapport aux autres.

25. Dispositif antidérapant selon l'une des revendications 1 à 24, caractérisé en ce que les éléments constitutifs (5,20,24) et les saillies (6) sont réalisés en polyuréthane.

26. Dispositif antidérapant selon la revendication 25, caractérisé en ce que les éléments constitutifs (5,20,24) sont renforcés par des garnitures internes en toile (21).

27. Dispositif antidérapant selon l'une des revendications 1 à 26, caractérisé en ce que les éléments constitutifs (5,20,24) sont munis d'entraîneurs (19) sur leur côté arrière.

28. Dispositif antidérapant selon l'une des revendications 1 à 27, caractérisé en ce que les tronçons de chaînes (3,4) sont constitués d'au moins trois et au plus sept maillons de chaînes.
